# EUROPÄISCHE PATENTSCHRIFT

(11) **EP 3 359 849 B1**
(45) Veröffentlichungstag und Bekanntmachung des Hinweises auf die Patenterteilung: **21.08.2019**
(21) Anmeldenummer: 16735892.8
(22) Anmeldetag: 07.07.2016
(51) Int. Cl.: F16J 9/22

(54) **KOLBENRING**
PISTON RING
SEGMENT DE PISTON

(30) Priorität: 05.10.2015 DE 102015116838
(43) Veröffentlichungstag der Anmeldung: 15.08.2018
(73) Patentinhaber: Federal-Mogul Burscheid GmbH, 51399 Burscheid (DE)
(72) Erfinder: SCHMIDT, Peter, 51399 Burscheid (DE)
(74) Vertreter: Becker Kurig Straus
(86) Internationale Anmeldenummer: PCT/EP2016/066129
(87) Internationale Veröffentlichungsnummer: WO 2017/059971

(56) Entgegenhaltungen:
- CH-A- 373 594

## Beschreibung

Die vorliegende Erfindung betrifft einen Kolbenring und insbesondere einen Kolbenring mit verbesserter Haltbarkeit für moderne Verbrennungsmotoren.

### Stand der Technik

Kompressions- bzw. Verdichtungskolbenringe (im Folgenden allgemein als "Kolbenringe" bezeichnet) erfüllen hauptsächlich die Aufgabe den Brennraum gegenüber dem Kurbelgehäuse eines Verbrennungsmotors abzudichten, um das Eindringen von Verbrennungsgasen in das Kurbelgehäuse und, in geringerem Maße, das Eindringen von Schmieröl in den Verbrennungsraum zu vermeiden. Kolbenringe dichten dabei nicht nur an der Lauffläche, d.h. an der Grenzfläche der äußeren axialen Fläche des Kolbenrings und der Innenwand des Zylinders, sondern auch an der Unterflanke des Kolbenrings, d.h. an der Grenzfläche zwischen Kolbenringnut und der unteren radialen Fläche des Kolbenrings, ab. Hier und im Folgenden ist mit "unten" die vom Verbrennungsraum abgewandte Seite des Zylinders bzw. Kolbens gemeint.

Bei heutigen hoch aufgeladenen Maschinen kommt es häufig zu korrosiven aber auch abrasiven Angriffen auf den unteren Ringflanken der Kolbenringe. Die Ursache dafür ist, dass zu wenig Schmieröl zwischen die Ringflanke und die Kolbennut gelangt. Das Problem wird sich in näherer Zukunft verschärfen, da weiter versucht werden wird, die Menge an Schmiermittel, die in den Bereich zwischen Kolbennut und Kolbenring gelangt, zu reduzieren. Dies dient der Vermeidung des so genannten "Ol Pumpens", d.h. die unerwünschte Förderung von Öl in den Verbrennungsraum durch die Taumelbewegungen des Kolbenrings während der Auf-und-Ab Bewegung des Kolbens, und somit letztendlich der Emissionskontrolle bzw. Reduktion von schädlichen Verbrennungsstoffen.

Durch die Korrosion und den abrasiven Verschleiß an der Nut und an der Flanke des Kolbenrings ist die Funktionsdichte eingeschränkt, was zu höherem Blow-By-Werten und letztendlich zu einem Versagen der Kolbenringe nach kurzen Laufzeiten führen kann.

Um der Abnutzung der Laufflächen entgegenzuwirken, werden diese verchromt. Bei der oben beschriebenen Problematik der Abnutzung der Ringflanken hat ein Verchromen jedoch keinen sonderlich positiven Effekt. In der CH 373594 A wird vorgeschlagen, um die Trockenreibung der beiden Metallflächen von Nut und Kolbenring aufeinander zu verhindern, mindestens die dem Verbrennungsraum zugewandte (obere) Fläche des Kolbenrings mit Vertiefungen zu versehen, die mit einem mit Bindemittel versetztem Trockenschmiermittel gefüllt sind. Das Trockenschmiermittelwirkt dabei gleichzeitig als Korrosionsschutz.

Jedoch ist der Schutz gegen Abrieb bzw. Korrosion durch solche Vertiefungen nur von sehr begrenzter Dauer. Kommen noch weitere abriebfördernde Faktoren hinzu, kann eine solche schützende Vertiefung innerhalb kurzer Zeit abgetragen werden und damit ihre Schutzwirkung verlieren. Die vorliegende Erfindung stellt eine Lösung für die oben beschriebene Problematik bereit.

### Kurze Beschreibung der Erfindung

Die vorliegende Erfindung betrifft einen Kolbenring und insbesondere einen Kolbenring mit verbesserter Haltbarkeit für moderne Verbrennungsmotoren. Wenn hier von einer dem Verbrennungsraum zu- oder abgewandten Seite gesprochen wird, bezieht sich dies nicht zwingend darauf, dass das entsprechende Merkmal erst im eingebauten Zustand zum Tragen kommt, sondern vielmehr auf die für den beschriebenen Kolbenring vorgesehene Einbaurichtung bezüglich Kurbelgehäuse und Verbrennungsraum. Diese vorgesehene Einbaurichtung ist für gewöhnlich auf dem Kolbenring vermerkt (z.B. Aufdruck "top" auf einer Ringflanke).

In einer bevorzugten Ausführungsform der vorliegenden Erfindung wird ein Kolbenring für einen Verbrennungsmotor bereitgestellt, umfassend mindestens eine an einer Ringflanke des Kolbenrings vorgesehene Vertiefung, wobei die mindestens eine Vertiefung in Umfangsrichtung des Kolbenrings ein variierendes Tiefenprofil aufweist.

In einer Ausführungsform ist die Ringflanke dem Verbrennungsraum abgewandt. In einer anderen Ausführungsform ist die Ringflanke dem Verbrennungsraum zugewandt.

In einer Ausführungsform umfasst der Kolbenring weiterhin mindestens eine an der dem Verbrennungsraum zugewandten Ringflanke vorgesehene Vertiefung, wobei die mindestens eine Vertiefung in Umfangsrichtung des Kolbenrings ein variierendes Tiefenprofil aufweist.

In einer Ausführungsform beträgt der axiale Abstand zwischen Ringflanke und dem höchsten Punkt der Vertiefung höchstens 50% des axialen Abstands zwischen Ringflanke und einem tiefsten Punkt der Vertiefung.

In einer Ausführungsform weist das Tiefenprofil der Vertiefung Sinusform, Wellenform, Zick-Zack-Form, Sägezahnform, oder Trapezform auf.

In einer Ausführungsform weist die Vertiefung in der Ringflanke des Kolbenrings über einen Teil der Ringflanke einen radial variierenden Abstand zum Rand der Ringflanke auf.

In einer Ausführungsform variiert der radiale Abstand zum Rand der Ringflanke in Umfangsrichtung sinusförmig.

In einer weiteren Ausführungsform umfasst der Kolbenring eine zweite an der dem Verbrennungsraum abgewandten Ringflanke vorgesehene Vertiefung, wobei die mindestens eine Vertiefung in Umfangsrichtung des Kolbenrings ein variierendes Tiefenprofil aufweist, das zu dem Tiefenprofil der ersten Vertiefung phasenverschoben ist.

In einer Ausführungsform ist in einer oder mehreren der mindestens einen Vertiefung ein weiches Material eingebracht.

In einer Ausführungsform umfasst das weiche Material ein Material, das ausgewählt ist aus einer Gruppe bestehend aus Kupfer, Molybdän, Titan, Chrom, Kobalt, Nickel, Zinn, Zink, Wolfram, oder Legierungen davon.

In einer Ausführungsform umfasst das weiche Material ein Material, das ausgewählt ist aus einer Gruppe bestehend aus Kupfer, Molybdän, oder Gleitlack.

In einer Ausführungsform beträgt die Füllhöhe des weichen Materials in der Vertiefung zwischen 5% und 50% und am bevorzugtesten zwischen 10% und 30%.

In einer Ausführungsform sind an der dem Verbrennungsraum abgewandten Seite der Ringflanke mindestens zwei Vertiefungen vorgesehen, von der eine die Füllung mit dem weichen Material aufweist und die andere ungefüllt ist.

In einer Ausführungsform sind an der dem Verbrennungsraum zugewandten Seite der Ringflanke mindestens zwei Vertiefungen vorgesehen, von der eine die Füllung mit dem weichen Material aufweist und die andere ungefüllt ist.

### Kurze Beschreibung der Zeichnungen

Alle hier gezeigten Zeichnungen sind von schematischer Natur und beispielhaft. Maßstäbe und Größen können übertrieben dargestellt werden, um Effekte und Ausbildung der Erfindung zu verdeutlichen. Wo immer möglich wurden gleiche Bezugszeichen verwendet, um gleiche oder ähnliche Teile zu bezeichnen.
Fig. 1 ist eine Querschnittsansicht eines Kolbenrings gemäß der vorliegenden Erfindung, der in eine Kolbennut eingebaut ist.
Fig. 2A ist eine Segmentansicht eines Kolbenrings gemäß einer Ausführungsform der vorliegenden Erfindung.
Fig. 2B ist eine Querschnittsansicht durch den Kolbenring aus Fig. 2A entlang der Schnittlinie S, die ein Tiefenprofil der Vertiefung zeigt.
Fig. 3 ist eine Segmentansicht eines Kolbenrings gemäß einer anderen Ausführungsform der vorliegenden Erfindung.
Fig. 4 ist eine Segmentansicht eines Kolbenrings gemäß einer weiteren Ausführungsform der vorliegenden Erfindung.

### Ausführliche Beschreibung der Zeichnung

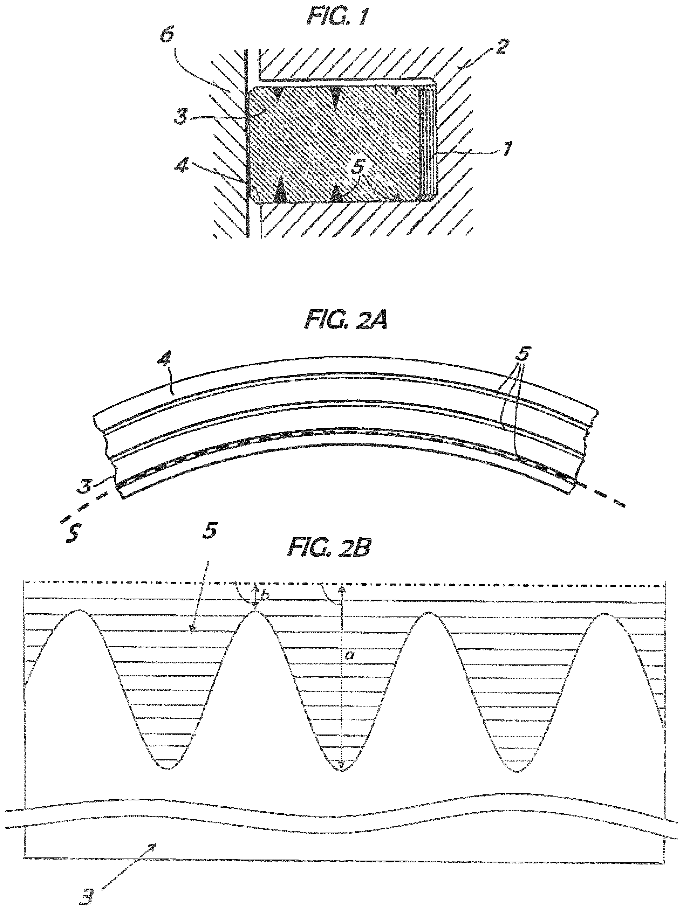

Die vorliegende Erfindung betrifft einen Kolbenring und insbesondere einen Kolbenring für moderne Verbrennungsmotoren mit verbesserter Haltbarkeit. Fig. 1 ist eine Querschnittsansicht eines Kolbenrings gemäß der vorliegenden Erfindung, der in eine Kolbennut eingebaut ist.

In Fig. 1 gezeigt insbesondere eine Vertiefung oder Nut 1 in einem Kolben 2 eines Verbrennungsmotors. In der Nut 1 ist ein Kolbenring 3 eingesetzt. In Fig.1 befindet sich der Verbrennungsraum (nicht gezeigt) oberhalb der gezeigten Anordnung. Durch den Anpressdruck der Verbrennungsgase wird der Kolbenring für gewöhnlich nach unten, also von dem Verbrennungsraum weg gedrückt. Dadurch kommt es zum einen an der Lauffläche des Kolbenrings 3 (d.h. an der Grenzfläche der äußeren axialen Fläche des Kolbenrings 3 und einer Zylinderinnenwand 6) und zum anderen an der Unterflanke 4 des Kolbenrings 3 (d.h. an der Grenzfläche zwischen Kolbenringnut 1 und der unteren radialen Fläche des Kolbenrings 3) zu erheblichen abtragenden Kräften.

Die Vertiefungen 5 gemäß der vorliegenden Erfindung sind schematisch an der Unterflanke 4 und der Oberflanke des Kolbenrings gezeigt. Da durch den Anpressdruck die Kräfte an der Unterflanke für gewöhnlich stärker sind, sind die Vertiefungen 5 an der unteren Flanke des Kolbenrings besonders bevorzugt, die Vertiefungen an der oberen Flanke in der vorliegenden Erfindung jedoch optional vorgesehen..

Fig. 2A ist eine Segmentansicht eines Kolbenrings gemäß einer Ausführungsform der vorliegenden Erfindung. Fig. 2A zeigt die Vertiefungen 5 in dem Kolbenring 3 als konzentrische Vertiefungen in der unteren Ringflanke 4. Entsprechende Vertiefungen können jedoch auch auf der oberen Ringflanke eines Kolbenrings gemäß der vorliegenden Erfindung vorgesehen sein.

Fig. 2B ist eine Querschnittsansicht durch den Kolbenring 3 aus Fig. 2A entlang der Schnittlinie S. Fig. 2B zeigt insbesondere, dass die Tiefe der Vertiefung 5 entlang der Vertiefung 5 nicht konstant ist, sondern im gewissen Maße, bevorzugt regelmäßig, variiert. In Fig. 2B ist beispielhaft ein Sinus-förmiger Vertiefungsprofilverlauf gezeigt, wobei der schraffierte, obere Teil die Aussparung der Vertiefung 5 anzeigt. Neben einem Sinus-förmigen Verlauf des Tiefenprofils der Vertiefung 5 sind auch andere Profilformen denkbar, wie etwa Wellenform, Zick-Zack-Form, Sägezahnform, Trapezform, etc. Die Form der Vertiefungen sollte hier nicht begrenzt sein. Die unterschiedlichen Formen sind unter Vertiefungen 5 einer Ringflanke und zwischen den Ringflanken frei kombinierbar. Besonders bevorzugt ist jedoch eine Wellen- bzw. Sinusform, wie sie in Fig. 2B schematisch dargestellt ist.

In einem radialen Querschnitt (wie der in Fig. 1) weist die Vertiefung bevorzugt V-Form (wie in Fig. 1), Rechteckform, Trapezform, die Form einer unten gerundeten Vertiefung (U-Form) oder eine andere geeignete Form auf, was hierin nicht begrenzt werden soll. In einer Ausführungsform beträgt der axiale Abstand b zwischen Ringflanke 4 und dem höchsten Punkt der Vertiefung höchstens 50% des axialen Abstands a zwischen Ringflanke 4 und einem tiefsten Punkt der Vertiefung beträgt.

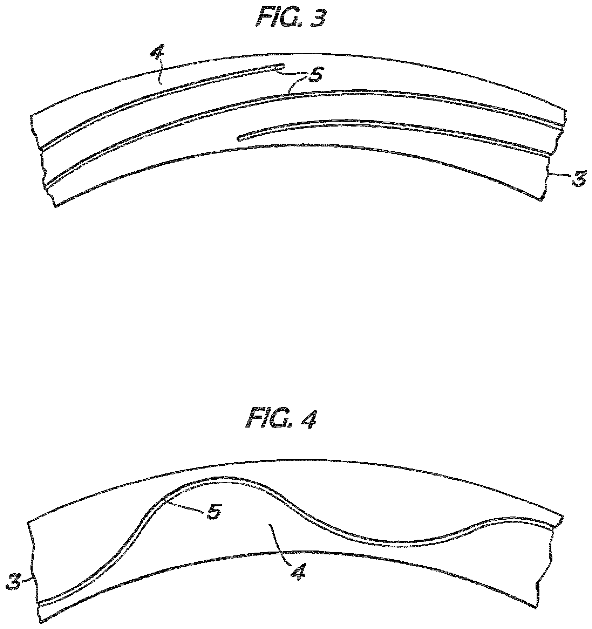

Fig. 3 und 4 zeigen jeweils eine Segmentansicht eines Kolbenrings gemäß weiterer Ausführungsformen der vorliegenden Erfindung. Fig. 3 zeigt schematisch wie mehrere Vertiefungen 5 konzentrisch versetzt auf der Ringflanke 4 des Kolbenrings 3 vorgesehen sind. Fig. 4 zeigt, dass die Vertiefung 5 in der Ringflanke 4 des Kolbenrings 5 eine Wellenform aufweist, die Vertiefung 5 in der Ringflanke 4 also über einen Teil der radialen Höhe des Kolbenrings 3 mäandriert. Anders ausgedrückt weist die Vertiefung 5 in der Ringflanke 4 des Kolbenrings 3 über einen Teil der Ringflanke 4 einen radial variierenden Abstand zum Rand der Ringflanke 4 auf. Bevorzugt ist dabei der äußere Rand der Ringflanke (4) gemeint. Diese gewellte Form ist besonders bevorzugt, so dass ein besonders positiver Effekt bei einer Sinus-förmigen oder wellenförmigen Vertiefung 5 (wie in Fig. 4 gezeigt) mit einem Sinus-förmigen oder wellenförmigen Vertiefungsprofil (wie in Fig. 2B gezeigt) erreicht werden kann.

Durch die umlaufenden oder teilweise umlaufenden Vertiefungen 5 kann sichergestellt werden, dass über die unterschiedlichen Druckverhältnisse in der Nut ein Ölfluss in Umfangsrichtung gewährleistet ist. Das so bereitgestellte Öl schmälert auf bekannte Weise Abtragung und Korrosion an der unteren Flanke 4 des Kolbenrings 3 und in optionalen Ausführungsformen auch an der oberen Flanke des Kolbenrings 3. Sind mehrere Vertiefungen 5 parallel zueinander angeordnet (wie etwa in Fig. 2A) so ist es wünschenswert, die Tiefenprofile der einzelnen Vertiefungen 5 nicht phasengleich (d.h. tiefe Stelle der Vertiefung in radialer Richtung oberhalb einer tiefen Stelle der benachbarten Vertiefung 5), sondern phasenversetzt (Berg über Tal) anzuordnen. Somit wird auch bei ungleichmäßiger Abnutzung des Kolbenrings ein gewisser Ölfluss in Umlaufrichtung bzw. Umfangsrichtung sichergestellt.

Optional kann in einer oder mehrere Vertiefungen 5 gemäß der vorliegenden Erfindung ein weiches Material eingebracht sein, welches die Partikel, die in das System durch die Verbrennung eingetragen werden, aufnimmt. Das weiche Material umfasst bevorzugt ein Material, das ausgewählt ist aus einer Gruppe bestehend aus Kupfer, Molybdän, Titan, Chrom, Kobalt, Nickel, Zinn, Zink, Wolfram, oder Legierungen davon. Besonders bevorzugt umfasst das weiche Material ein Material, das ausgewählt ist aus einer Gruppe bestehend aus Kupfer, Molybdän, oder Gleitlack. Generell sind aber alle Materialien als das weiche Material anwendbar, die geeignet sind, um einen Schmiereffekt bereitzustellen, wie er üblicherweise im Bau von Kolbenhemden oder Zylinderwänden erwünscht ist (z.B. in Form von Einschlüssen oder Sicken im Kolbenhemd/der Zylinderwand).

In einer Ausführungsform beträgt die Füllhöhe des weichen Materials in der Vertiefung (in % der Tiefe der Vertiefung, d.h. des senkrechten Abstands von Ringflanke zum tiefsten Punkten der Vertiefung) zwischen 2% und 99%, bevorzugt jedoch zwischen 5% und 50% und am bevorzugtesten zwischen 10% und 30%.

Die Vertiefungen 5 der vorliegenden Erfindung können durch bekannte Verfahren entweder in den Kolbenring mechanisch eingefräst oder (chemisch) erodiert werden.

## Patentansprüche

1. Kolbenring (3) für einen Verbrennungsmotor, umfassend:
mindestens eine an einer Ringflanke (4) des Kolbenrings (3) vorgesehene Vertiefung (5), **dadurch gekennzeichnet, dass** die mindestens eine Vertiefung (5) in Umfangsrichtung des Kolbenrings ein variierendes Tiefenprofil aufweist.

2. Kolbenring (3) gemäß Anspruch 1, wobei die Ringflanke (4) dem Verbrennungsraum abgewandt ist.

3. Kolbenring (3) gemäß Anspruch 1, wobei die Ringflanke (4) dem Verbrennungsraum zugewandt ist.

4. Kolbenring (3) gemäß Anspruch 2, weiterhin umfassend:
mindestens eine an der dem Verbrennungsraum zugewandten Ringflanke vorgesehene Vertiefung (5), wobei die mindestens eine Vertiefung (5) in Umfangsrichtung des Kolbenrings (3) ein variierendes Tiefenprofil aufweist.

5. Kolbenring (3) gemäß einem der vorstehenden Ansprüche, wobei der axiale Abstand (b) zwischen Ringflanke (4) und dem höchsten Punkt der Vertiefung höchstens 50% des axialen Abstands (a) zwischen Ringflanke (4) und einem tiefsten Punkt der Vertiefung beträgt.

6. Kolbenring (3) gemäß einem der vorstehenden Ansprüche, wobei das Tiefenprofil der Vertiefung (5) Sinusform, Wellenform, Zick-Zack-Form, Sägezahnform, oder Trapezform aufweist.

7. Kolbenring (3) gemäß einem der vorstehenden Ansprüche, wobei die Vertiefung (5) in der Ringflanke (4) des Kolbenrings (3) über einen Teil der Ringflanke (4) einen radial variierenden Abstand zum Rand der Ringflanke (4) aufweist.

8. Kolbenring (3) gemäß Anspruch 7, wobei der radiale Abstand zum Rand der Ringflanke (4) in Umfangsrichtung sinusförmig variiert ist.

9. Kolbenring (3) gemäß einem der vorstehenden Ansprüche, umfassend eine zweite an der dem Verbrennungsraum abgewandten Ringflanke (4) vorgesehene Vertiefung (5), wobei die mindestens eine Vertiefung (5) in Umfangsrichtung des Kolbenrings ein variierendes Tiefenprofil aufweist, das dem zu dem Tiefenprofil der ersten Vertiefung (5) phasenverschoben ist.

10. Kolbenring (3) gemäß einem der vorstehenden Ansprüche, wobei in einer oder mehreren der mindestens einen Vertiefung (5) ein weiches Material eingebracht ist.

11. Kolbenring (3) gemäß Anspruch 10, wobei das weiche Material ein Material umfasst, das ausgewählt ist aus einer Gruppe bestehend aus Kupfer, Molybdän, Titan, Chrom, Kobalt, Nickel, Zinn, Zink, Wolfram, oder Legierungen davon.

12. Kolbenring (3) gemäß Anspruch 10 oder 11, wobei das weiche Material ein Material umfasst, das ausgewählt ist aus einer Gruppe bestehend aus Kupfer, Molybdän, oder Gleitlack.

13. Kolbenring (3) gemäß einem der Ansprüche 10 bis 12, wobei die Füllhöhe des weichen Materials in der Vertiefung zwischen 5% und 50% und am bevorzugtesten zwischen 10% und 30% beträgt.

14. Kolbenring (3) gemäß einem der Ansprüche 10 bis 13, wobei an der dem Verbrennungsraum abgewandten Seite der Ringflanke (4) mindestens zwei Vertiefungen (5) vorgesehen sind, von der eine die Füllung mit dem weichen Material aufweist und die andere ungefüllt ist.

15. Kolbenring (3) gemäß einem der Ansprüche 10 bis 14, wobei an der dem Verbrennungsraum zugewandten Seite der Ringflanke (4) mindestens zwei Vertiefungen (5) vorgesehen sind, von der eine die Füllung mit dem weichen Material aufweist und die andere ungefüllt ist.

## Claims

1. Piston ring (3) for an internal combustion engine, comprising:
at least one indentation (5) provided on a ring edge (4) of the piston ring (3), **characterised in that** the at least one indentation (5) has a varying depth profile in circumferential direction of the piston ring.

2. Piston ring (3) according to claim 1, wherein the ring edge (4) is facing away from the combustion chamber.

3. Piston ring (3) according to claim 1, wherein the ring edge (4) is facing towards the combustion chamber.

4. Piston ring (3) according to claim 2, further comprising:
at least one indentation (5) provided on the ring edge facing towards the combustion chamber, wherein the at least one indentation (5) has a varying depth profile in the circumferential direction of the piston ring (3) .

5. Piston ring (3) according to any one of the preceding claims, wherein the axial distance (b) between ring edge (4) and the highest point of the indentation is no greater than 50% of the axial distance (a) between ring edge (4) and a deepest point of the indentation.

6. Piston ring (3) according to any one of the preceding claims, wherein the depth profile of the indentation (5) has a sinusoidal shape, a zig-zag shape, a sawtooth shape, or a trapezoidal shape.

7. Piston ring (3) according to any one of the preceding claims, wherein the indentation (5) in the ring edge (4) of the piston ring (3) has a radially varying distance from the border of the ring edge (4) on a part of the ring edge (4).

8. Piston ring (3) according to claim 7, wherein the radial distance from the border of the ring edge (4) varies sinusoidally in circumferential direction.

9. Piston ring (3) according to any one of the preceding claims, comprising a second indentation (5) provided on the ring edge (4) facing away from the combustion chamber, wherein the at least one indentation (5) has a varying depth profile in the circumferential direction of the piston ring, which is phase-shifted relative to the depth profile of the first indentation (5) .

10. Piston ring (3) according to any one of the preceding claims, wherein in one or a plurality of the at least one indentation (5) a soft material is inserted.

11. Piston ring (3) according to claim 10, wherein the soft material comprises a material that is selected from a group consisting of copper, molybdenum, titanium, chromium, cobalt, nickel, tin, zinc, tungsten, or alloys thereof.

12. Piston ring (3) according to claim 10 or 11, wherein the soft material comprises a material selected from a group consisting of copper, molybdenum or lubricant varnish.

13. Piston ring (3) according to any one of claims 10 to 12, wherein the filling height of the soft material in the indentation is between 5% and 50% and most preferably between 10% and 30%.

14. Piston ring (3) according to any one of claims 10 to 13, wherein on the side of the ring edge (4) facing away from the combustion chamber at least two indentations (5) are provided, one of which is filled with the soft material and the other is unfilled.

15. Piston ring (3) according to any one of claims 10 to 14, wherein on the side of the ring edge (4) facing towards the combustion chamber at least two indentations (5) are provided, one of which is filled with the soft material and the other is unfilled.

## Revendications

1. Segment de piston (3) pour un moteur à combustion, comprenant :
au moins un creux (5) prévu sur un flanc de segment (4) du segment de piston (3),
**caractérisé en ce que** ledit au moins un creux (5) présente un profil de profondeur variable dans la direction circonférentielle du segment de piston.

2. Segment de piston (3) selon la revendication 1, dans lequel le flanc de segment (4) est détourné de la chambre de combustion.

3. Segment de piston (3) selon la revendication 1, dans lequel le flanc de segment (4) est tourné vers la chambre de combustion.

4. Segment de piston (3) selon la revendication 2, comprenant en outre :
au moins un creux (5) prévu sur le flanc de segment tourné vers la chambre de combustion, dans lequel ledit au moins un creux (5) présente un profil de profondeur variable dans la direction circonférentielle du segment de piston (3).

5. Segment de piston (3) selon l'une quelconque des revendications précédentes, dans lequel la distance axiale (b) entre le flanc de segment (4) et le point le plus haut du creux correspond au maximum à 50 % de la distance axiale (a) entre le flanc de segment (4) et un point le plus bas du creux.

6. Segment de piston (3) selon l'une quelconque des revendications précédentes, dans lequel le profil de profondeur du creux (5) présente une forme sinusoïdale, ondulée, en zigzag, en dents de scie ou trapézoïdale.

7. Segment de piston (3) selon l'une quelconque des revendications précédentes, dans lequel le creux (5) dans le flanc de segment (4) du segment de piston (3) présente sur une partie du flanc de segment une distance radialement variable par rapport au flanc de segment (4).

8. Segment de piston (3) selon la revendication 7, dans lequel la distance radiale par rapport au bord du flanc de segment (4) est variable de manière sinusoïdale dans la direction circonférentielle.

9. Segment de piston (3) selon l'une quelconque des revendications précédentes, comprenant un deuxième creux (5) prévu sur le flanc de segment (4) détourné de la chambre de combustion, dans lequel ledit au moins un creux (5) présente dans la direction circonférentielle du segment de piston un profil de profondeur variable qui est déphasé par rapport au profil de profondeur du premier creux (5).

10. Segment de piston (3) selon l'une quelconque des revendications précédentes, dans lequel un matériau souple est introduit dans un ou plusieurs dudit au moins un creux (5) .

11. Segment de piston (3) selon la revendication 10, dans lequel le matériau souple comprend un matériau qui est sélectionné dans un groupe composé de cuivre, de molybdène, de titane, de chrome, de cobalt, de nickel, d'étain, de zinc, de tungstène ou de leurs alliages.

12. Segment de piston (3) selon la revendication 10 ou 11, dans lequel le matériau souple comprend un matériau qui est sélectionné dans un groupe composé de cuivre, de molybdène ou de vernis antifriction.

13. Segment de piston (3) selon l'une quelconque des revendications 10 à 12, dans lequel le niveau de remplissage du matériau souple dans le creux est compris entre 5 % et 50 % et de la plus grande préférence entre 10 % et 30 %.

14. Segment de piston (3) selon l'une quelconque des revendications 10 à 13, dans lequel sur le côté du flanc de segment (4) détourné de la chambre de combustion, au moins deux creux (5) sont prévus dont l'un présente le remplissage avec le matériau souple et l'autre n'est pas rempli.

15. Segment de piston (3) selon l'une quelconque des revendications 10 à 14, dans lequel sur le côté du segment de flanc (4) tourné vers la chambre de combustion, au moins deux creux (5) sont prévus dont l'un présente le remplissage avec le matériau souple et l'autre n'est pas rempli.
